# EUROPEAN PATENT APPLICATION

(11) **EP 3 780 362 A1**
(43) Date of publication of application: **17.02.2021**
(21) Application number: 19219949.5
(22) Date of filing: 30.12.2019
(51) Int. Cl.: H02K 11/20, H02K 9/22, H02K 9/02, H02K 9/04

(54) **SENSOR ARRANGEMENT**

(71) Applicant: Robert Bosch GmbH, 70442 Stuttgart (DE)
(72) Inventor: Oliveira, Joao, 4740-376 Fao (PT); Monteiro, Nuno, 4445-342 Ermesinde (PT)

(57) **Abstract**

The present invention concerns sensor arrangement (1) comprising a rotor (2) including at least one sensor (3) constituting a heat producing element, said rotor (2) being rotatable around a rotor axis (4), a stator (5) surrounding said rotor (2), and a hollow shaft (6) concentric to the rotor axis (4) and connected to the rotor (2), said hollow shaft (6) including a central air channel (7) having an opening (8, 9) at its extremities thus trespassing the rotor (2) and the stator (5).

## Description

### Prior art

The present invention concerns a sensor arrangement with an optimised heat dissipation and temperature control.

Most of the known dissipating solutions in this area work by using rotational parts, as e.g. fans, impellers, piezoelectric blowers, etc. as cooling devices for stator heat generator elements. Emerging hermetically-sealed automotive systems with electronics mounted on rotors usually rely on internal convection, which do not answer to incoming heat rates (>20 W) and, in particular, to strict automotive operating temperatures (e.g. for LiDAR camera, from -40 °C +85 °C).

Amongst others, US 2006/181163 A discloses a rotor device capable of forcing heat dissipation. The rotor of this device includes a hub and an inner casing. The hub provides a closed end with at least a through-hole radially disposed thereon and a projection extending therefrom along the circumference of the through-hole. The inner casing is disposed in the hub. Fluid is forced by the projection to move outward or inward via the through-hole, so that temperature of the fluid in the hub and the inner casing can be lowered down.

US 2006/066156 A discloses a motor rotor cooling with rotating heat pipes. The heat pipes are radially disposed, embedded in the rotor. Centrifugal forces and the heat pipe's fluid's phase change are taken advantage of maximising the heat transfer.

CN 207705968 U discloses a heat dissipating rotor body, with an outer shell and a rotating shaft inside. On one end, thereof, is a fan shape that forces flow over the outer shell with the whole rotation of the apparatus cooling it.

The known solutions, as e.g. fan, blowers and heat sinks, are not suitable for emerging hermetically-sealed sensors with electronics mounted on rotating parts with high dissipation rates that can exceed 20 W.

Moreover, emerging solutions that rely on internal convection to dissipate the generated heat from rotor parts to the environment are not capable enough to overcome the current thermal challenges. In particular, electronics and optoelectronic elements need to fulfil a tight internal operating temperature range while complying, in particular with automotive requirements.

Furthermore, known cooling solutions based on convective heat dissipation need large surface areas on the inside and outside of the device to have a proper heat transfer what results in bigger dimensions of the devices.

So, known solutions for cooling sensors, in particular, automotive sensors, work by dissipating the heat generated either by natural convection, usually for low power dissipations (typically, less than 10 W), or by conducting the power to an external heat sink, either the external air or another external heat sink. Both of these solutions are not suitable for the need of cooling an inner rotor in an enclosed, hermetically-sealed stator housing, dissipating large amounts of heat (>20 W). This concerns the first solution, because the thermal resistances created by the internal convection interfaces between the rotor and the exterior are too large to effectively keep it cool, and the latter, because it is very mechanically inefficient to physically connect a rotor to a stator to conduct the heat outward.

### Disclosure of the present invention

The sensor arrangement according to the features of claim 1 of the present application results in the main advantage of the possibility of effectively cooling a rotor body enclosed in a hermetically-sealed stator from the rotor itself to the exterior via heat conduction, without the need of having further barriers like the air mass inside the enclosure which necessarily creates a large resistance to the heat flow. So, the solution according to claim 1 of the present application can be tweaked according to the particular needs of a sensor by adding or subtracting features, like fans or fins, to be capable of dissipating the required amount of heat.

In particular, the advantages of the solution of the present invention according to claim 1 are as follows:
- External air flow acts directly on a rotor part where critical heat sources are mounted, bypassing most thermal resistances from convective approach between the source and the external air;
- Advantageously, a passive thermal cooling solution is provided, depending on the heat loads;
- In particular and advantageously, an enhancement is achievable with an extra force convection solution as e.g. by providing a fan;
- The device dimensions can be reduced, particularly compared to known solutions, since the heat transfer is not dependent on an internal convection.

Briefly summarised, the present invention concerns a sensor arrangement that comprises an inner rotor and an outer stator. The inner rotor and the outer stator are connected by a hollow shaft that is concentric with the rotor axis such that this shaft trespasses the whole device being comprised of the inner rotor and the outer stator, thus creating a through-hole through the stator and the rotor. This configuration constitutes a rotor heat sink and its hollow interior constitutes a central air channel.

The hollow shaft is connected to the rotor and, consequently rotates with this rotor.

The depending claims contain advantageous embodiments of the present invention.

The shaft is physically connected to the rotor and, consequently, rotates together with the rotor. Advantageously, the shaft and the rotor are connected to each other via two sealed bearings at both extremities of the shaft. The sealing in the region of the bearings can be realised by using a sealed bearing or mounting an additional sealing lid.

According to the inventive concept of the present invention, the sensor arrangement can include heating elements, as e.g. electronic elements, that are mounted on the rotor. While the sensor arrangement is working, the heat produced by such electronic elements or components is conductively transferred to the rotor heat sink, which, in turn, can dissipate it to the outside air directly, preferably bypassing the stator altogether.

An especially preferred embodiment provides a purely passive solution featuring a rotor heat sink that can be composed of spiral fins along the external wall of the shaft. Advantageously, it uses the inherent rotation of the device to force the air through the hole, cooling the rotor heat sink. In particular, with the help of spiral fins along the outer face of the shaft, the airflow can be driven up or down through the channel of the shaft, thus increasing a flow rate along the shaft and, consequently, improving heat transfer. In case the device is mounted on the outside of a moving vehicle, two covers may be used to shield the air opening from wind pressure, by placing their entrance and exit in the wake region of the device, allowing it to work regardless of wind speed.

According to another embodiment of the present invention, it is contemplated that the sensor of the sensor arrangement according to claim 1 is exposed to an incoming airflow, if, for example, the sensor arrangement according to the present invention is moving with a vehicle. According to this embodiment of the present invention, the implemented covers channel the incoming airflow through the central air channel, accelerating the airflow via venturi effect. This preferred embodiment maintains the cooling mechanism completely passive, by installing the channelling cover, which uses wind speed to drive a high velocity airflow through the hole along the shaft. In particular, and advantageously, this embodiment is particularly suited for cases where the sensor arrangement according to the present invention is moving, for example, when it is mounted on the outside of a vehicle.

According to another preferable embodiment, a dynamic solution is proposed by using a baseline of one or more air fans that can be installed on the air opening of the rotor heat sink to force airflow through it at a desired flow rate according to the heat dissipation needs. This makes it possible to cool the entire mechanism more controllable and more effectively, since it is not dependent on variables like wind speed. Also this embodiment can make use of shield covers to protect the cooling mechanism, if the device is under high airflow velocities, like, for example, if it is mounted on the exterior of a vehicle.

### Brief description of the drawings

Further details, advantages, and features of the present invention are described with respect to the following figures. Identical or functionally similar components are always described with the same reference signs. The drawings show:
- Figure 1: a schematically simplified depiction of a first embodiment of a sensor arrangement according to the present invention,
- Figure 2: a depiction according to figure 1 of a second embodiment of the sensor arrangement,
- Figure 3: a depiction according to figure 1 of a third embodiment of the sensor arrangement, and
- Figure 4: a depiction according to figures 1 to 3 of a fourth embodiment of the present invention.

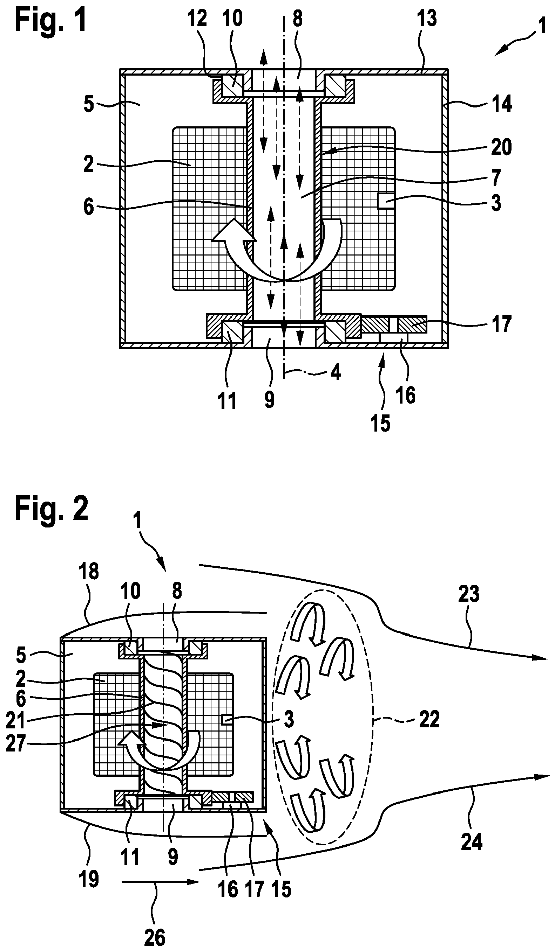

Figure 1 shows a first embodiment of a sensor arrangement 1 comprising a rotor 2 including at least one sensor constituting a heat producing element that is shown in figure 1 highly simplified by block 3. The rotor 2 is rotatable around a rotor axis 4.

Moreover, the sensor arrangement 1 includes a stator 5 that surrounds the rotor 2.

Furthermore, the embodiment of the present invention of the sensor arrangement 1 includes a hollow shaft 6 that is disposed concentrically to the rotor axis 4 and that is connected to the rotor 2. This hollow shaft 6 includes a central air channel 7 that comprises air openings 8 and 9 at its extremities, so that this air channel 7 trespasses the rotor 2 and the stator 5.

Moreover, according to figure 1, the shaft 6 is supported by two bearings 10, 11 that are disposed at the extremities of shaft 6 and, consequently, with respect to stator 5.

Preferably, bearings 10, 11 are sealed bearings, or, are equipped with insulating lids, one of which is identified in figure 1 with the reference sign 12.

Furthermore, figure 1 illustrates that the stator 5 comprises stator walls (13, 14) and that the rotor 2 may be driven by a motor 15 and a transmission 16 connected to said motor 15, so that the shaft 6 and the rotor 2 may be rotated simultaneously.

The dotted lines of figure 1 show the airflow through the hollow shaft 6 in order to cool the element 3 producing heat, that, according to the present invention, may be dissipated to the outside of the sensor arrangement 1 according to the present invention.

Figure 2 illustrates a second embodiment of the sensor arrangement 1 according to the present invention with the same features being identified by the same reference signs as used in figure 1.

The second embodiment of the sensor arrangement 1 comprises spiral fins 21 along the external wall 27 of shaft 6. These spiral fins 21 constitute a purely passive solution according to the present invention using the inherent rotation of rotor 2 and shaft 6 to force an airflow through the hollow shaft 6 in order to cool the rotor heat sink 20 that is identified by the respective reference sign in figure 1.

The result is, according to the embodiment of figure 2, a wake region 22 that results from covers 18, 19 and the spiral fins 21 disposed on the outer surface 27 of shaft 6. The wake region 22 is amplified by the two covers 18, 19 along with the air movement through the central air channel 7.

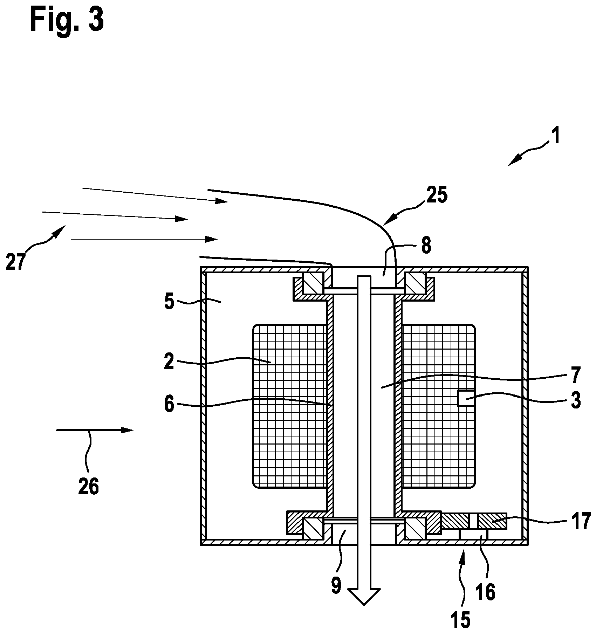

The embodiment of figure 3 identifies the features that are identical to the embodiments of figures 1 and 2 by the reference signs.

So, reference can be made to the respective description of figures 1 and 2.

The embodiment of figure 3 features a channelling cover 25 that drives incoming air according to arrows 26 and 27 through the central air channel 7.

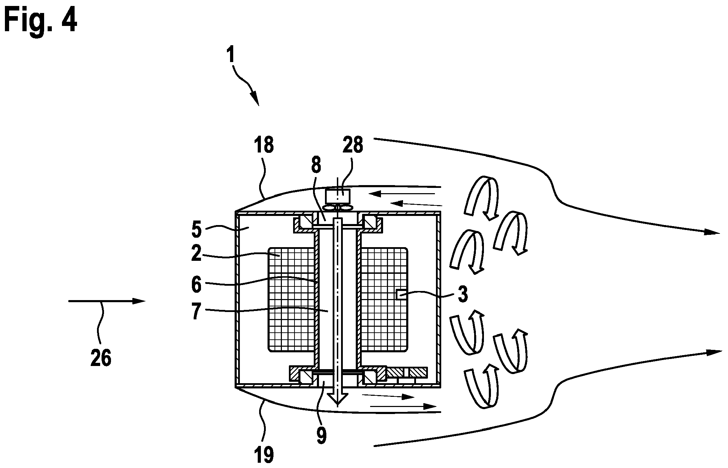

The embodiment of figure 4 depicts an embodiment using an active device in the form of a fan 28 that is disposed adjacent to the top air opening 8 driving the air flow through the central air channel 7 with the rotating body of shaft 6 being finned or not being finned.

In addition to the written disclosure of the present invention, it is explicitly made reference to the drawings according to figures 1 to 4 for completion of the disclosure according to the present invention.

## Claims

1. Sensor arrangement (1) comprising:
- a rotor (2) including at least one sensor (3) constituting a heat producing element, said rotor (2) being rotatable around a rotor axis (4),
- a stator (5) surrounding said rotor (2), and
- a hollow shaft (6) concentric to the rotor axis (4) and connected to the rotor (2), said hollow shaft (6) including a central air channel (7) having an opening (8, 9) at its extremities thus trespassing the rotor (2) and the stator (5).

2. Sensor arrangement according to claim 1, wherein said shaft (6) is supported by two bearings (10, 11) at its extremities with respect to the stator (5).

3. Sensor arrangement according to claim 2, wherein the bearings (10, 11) are sealed bearings.

4. Sensor arrangement according to claim 2, wherein the bearings (10, 11) are equipped with insulating lids (12).

5. Sensor arrangement according to one of claims 1 to 4, wherein the shaft (6) comprises spiral fins (21) along its external wall (27).

6. Sensor arrangement according to one of claims 1 to 5 wherein the stator (5) comprises a top cover (18) around a top air opening (8) and a bottom cover (19) around a bottom air opening (9).

7. Sensor arrangement according to one of claims 1 to 4, wherein the stator (5) comprises a channelling cover (25) adjacent to the top opening (8).

8. Sensor arrangement according to one of claims 1 to 7, wherein an active device (28) is disposed adjacent to the top air opening (8).

9. Sensor arrangement according to claim 8, wherein the active device (28) is a fan.

10. Sensor arrangement according to claim 8 or 9, wherein the shaft (6) includes fins, in particular spiral fins, or is fin-free.
